(19) Europäisches Patentamt
European Patent Office
Office européen des brevets

(11) Veröffentlichungsnummer: **0 239 526 B1**

(12) # EUROPÄISCHE PATENTSCHRIFT

(45) Veröffentlichungstag der Patentschrift: **12.09.90**

(51) Int. Cl.[5]: **C09C 1/00,** C01G 31/00, C01G 39/00, C01G 41/00

(21) Anmeldenummer: **87810085.8**

(22) Anmeldetag: **13.02.87**

(54) **Anorganische Verbindungen auf der Basis von Wismuthvanadat.**

(30) Priorität: **19.02.86 CH 659/86**

(43) Veröffentlichungstag der Anmeldung: **30.09.87 Patentblatt 87/40**

(45) Bekanntmachung des Hinweises auf die Patenterteilung: **12.09.90 Patentblatt 90/37**

(84) Benannte Vertragsstaaten: **BE CH DE ES FR GB IT LI NL**

(56) Entgegenhaltungen:
**DE-A- 3 221 338**
**DE-A- 3 315 850**
**US-A- 4 063 956**

(73) Patentinhaber: **CIBA-GEIGY AG, Klybeckstrasse 141, CH-4002 Basel(CH)**

(72) Erfinder: **Herren, Fritz, Dr., Birkenweg 8, CH-3186 Düdingen(CH)**

**EP 0 239 526 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft ein neues Verfahren zum Einfärben von hochmolekularem organischem Material in der Masse mit Wismuthvanadatpigmenten, neue Wismuth-Vanadat/Molybdat- und -Vanadat/-Wolframat-Verbindungen, sowie Gemische davon, und Verfahren zu deren Herstellung.

Die am häufigsten verwendeten anorganischen Gelbpigmente sind Cadmiumsulfide, Bleichromate, Nickeltitangelb und Eisenoxidgelb. Von den färberischen Eigenschaften her in der Applikation vermögen Eisenoxidgelb und Nickeltitangelb, insbesondere bezüglich Farbreinheit und Farbstärke, nicht zu befriedigen. Bei den Cadmiumsulfidund Bleichromatpigmenten dagegen lässt die Wetterbeständigkeit zu wünschen übrig.

Alternativen wurden bereits vorgeschlagen. So wird beispielsweise in den US-Patentschriften Nr. 4,115,141 und Nr. 4,115,142 Wismuthvanadat als pigmentäre, leuchtend schlüsselblumengelbe Verbindung zum Einfärben von Kunststoffen und Lacken beschrieben. Gemäss diesen Patentschriften liegt dabei das Wismuthvanadat vollständig in der monoklinen Modifikation (β-Fergusonit) vor. Die Herstellung dieser Verbindung erfolgt so, dass aus löslichen Wismuth- und Vanadium-Verbindungen zuerst ein gelartiger Vorläufer ausgefällt wird, welcher dann entweder durch eine Hitzebehandlung bei 200-500°C oder durch eine unter bestimmten Bedingungen durchgeführte wässrige Nachbehandlung in die kristalline, pigmentäre Form übergeführt wird.

Es wurde ausserdem gemäss der US-Patentschrift Nr. 4 455 174 ein Wismuthvanadat/Molybdat bzw. Wismuthvanadat/Wolframat als weiteres alternatives gelbes Pigment vorgeschlagen. Dabei handelt es sich um mehrphasige Produkte, die aus einer Wismuthvanadat-Phase sowie einer Wismuthmolybdat- und/oder einer Wismuthwolframat-Phase bestehen.

In der US-Pstentschrift Nr. 4 316 746 sind zudem Wismuthvanadat/Molybdat- und Wismuthvanadat/Wolframat-Pigmente beschrieben, die im Falle von Wismuthvanadat/Molybdat aus einer kristallinen Phase mit scheelitartiger Struktur bestehen, während im Falle von Wismuthvanadat/Wolframat ein zweiphasiges Produkt vorliegt.

Weitere Verbindungen auf Basis von Wismuthvanadat werden auch in Ann.Chim. France 1978, (3), s. 461-469, erwähnt, indem dort die ferroelektrischen Eigenschaften der Systeme $BiVO_4$-$BiNbO_4$ und $BiVO_4$-$CaWO_4$ untersucht worden sind, ohne dass dabei auf irgendwelche pigmentäre Eigenschaften dieser Verbindungen hingewiesen wird.

Alle obengenannten Wismuthvanadat/Molybdatbzw. Wismuthvanadat/Wolframat-Pigmente brauchen zu ihrer Herstellung ein aufwendiges, mehrstufiges Verfahren, bestehend aus Fällung, Calzinierung und anschliessendem Mahlprozess. Ausserdem sind diese Pigmente in verschiedener Hinsicht, z.B. bezüglich bestimmter Pigmenteigenschaften in der Applikation, nicht immer befriedigend.

Gegenstand der Erfindung ist ein Verfahren zum Färben von hochmolekularem organischem Material in der Masse, dadurch gekennzeichnet, dass man eine Verbindung der allgemeinen Formel (I)

$(Bi,A)(V,D)O_4$ (I)

in einer tetragonalen, scheelitartigen Kristallstruktur verwendet, wobei A ein Erdalkalimetall, Zn oder ein Gemisch davon, V Vanadium und D Mo, W oder ein Gemisch davon bedeuten, und das Molverhältnis A zu Bi zwischen 0,1 und 0,4 und das Molverhältnis D zu V zwischen 0 und 0,4 liegen.

Die Schreibweise (Bi,A) der obigen Formel (I) ist so zu verstehen, dass das Wismuth als Wismuth-III-Ion vorliegt und teilweise durch das zweiwertige Metallkation A ersetzt wird. Vanadium dagegen liegt als Vanadium-V-Ion in Form von Vanadation vor und kann teilweise durch das sechswertige Metallkation D als Molybdat oder Wolframat oder Gemische davon ersetzt werden.

Bedeutet A ein Erdalkalimetall, so handelt es sich dabei beispielsweise um Be, Mg, Ca, Sr und Ba, insbesonders aber um Ca und Sr.

D ist bevorzugt Mo.

Erfindungsgemäss in Frage kommende Gemische sind Gemische aus mindestens einem Erdalkalimetall und Zn oder Gemische aus verschiedenen Erdalkalimetallen, sowie Gemische aus Mo und W, in beliebigen Molverhältnissen.

Bevorzugte Molverhältnisse A zu Bi und D zu V sind 0,1 bis 0,3.

Bevorzugt sind Verbindungen der Formel I, worin A Ca oder Sr und D Mo oder W bedeuten, und die Molverhältnisse A zu Bi und D zu V zwischen 0,15 und 0,3 liegen.

Besonders bevorzugt sind Verbindungen der Formel I, worin A Ca und D Mo bedeuten, und die Molverhältnisse Ca zu Bi und Mo zu V zwischen 0,15 und 0,3 liegen.

Einen weiteren Erfindungsgegenstand bilden die neuen Verbindungen der allgemeinen Formel (II) in einer tetragonalen, scheelitartigen Kristallstruktur

$(Bi,A)(V,D)O_4$ (II),

worin A ein Erdalkalimetall, Zn oder ein Gemisch davon ist, V Vanadium, D Mo, W oder ein Gemisch davon bedeutet, und das Molverhältnis A zu Bi zwischen 0,1 und 0,4 und das Molverhältnis D zu V zwischen 0 und 0, 4 liegen, wobei D nicht W darstellen darf, wenn A Ca bedeutet.

Bevorzugte Molverhältnisse A zu Bi und D zu V sind 0,1 bis 0,3.

Bevorzugt sind Verbindungen der Formel (II), worin A Ca und D Mo bedeuten und die Molverhältnisse A zu Bi und Mo zu V zwischen 0,1 und 0,3 liegen.

Die Unterscheidung zwischen monokliner und tetragonaler Kristallstruktur erfolgt durch Aufnahme des Pulverröntgendiagrammes. Wenn auch natürlich das gesamte Diagramm zur Beurteilung betrachtet werden muss, erweist sich doch der Bereich bei einem Beugungsebenenabstand von ca. 2,6 Å als besonders illustrativ. $BiVO_4$ in der stabilen beta-Fergusonit Strukur, welche monokline Symmetrie aufweist, ergibt zwei ungefähr gleich intensive Linien bei d-Werten von 2,546 Å und 2,598 Å. Die erfindungsgemässen Verbindungen weisen eine tetragonale, scheelitartige Struktur auf und zeigen in diesem Bereich nur eine Linie mit einem d-Wert von ca. 2,58 Å.

Die Verbindungen der Formeln (I) und (II) lassen sich nach verschiedenen Verfahren herstellen, wobei auch an und für sich bekannte Verfahren, wie Synthese durch Festkörperreaktion bei erhöhter Temperatur ausgehend von den entsprechenden Metalloxiden, insbesondere aber auch mehrstufige Verfahren, angewendet werden können. Dabei wird gemäss einer der unten angegebenen Verfahrensvarianten zuerst ein gelartiger Vorläufer gefällt, welcher dann nach Filtrieren, salzfreiem Waschen und Trocknen einer Hitzebehandlung bei 300-700°C, bevorzugt bei 350-550°C, unterworfen und dabei in die kristalline, pigmentäre Form übergeführt wird. Dieser Vorläufer lässt sich beispielsweise durch Vermischen der Lösung eines Wismuth-III-Salzes, beispielsweise in Salpeter- oder Essigsäure, enthaltend ein Erdalkalimetall- oder Zinksalz oder ein Gemisch davon, mit der wässrigen Lösung eines Vanadatsalzes und eines Molybdat- oder Wolframat-Salzes oder eines Gemisches davon herstellen.

Die oberen Konzentrationsgrenzen der oben aufgeführten Reaktionslösungen werden durch die Löslichkeit der eingesetzten Salze bestimmt, wobei aber der Einsatz verdünnter Lösungen insbesonders zur besseren Kontrolle des äquimolaren absatzweisen Mischens der erfindungsgemäss in Betracht gezogenen Lösungen vorteilhaft ist. Die Lösungen werden bei zweckmässig 10-100°C, vorzugsweise bei 20-30°C, gemischt.

Wismuth-III-Salzlösungen lassen sich beispielsweise durch Lösen von Wismuthnitrat [z.B. $Bi(NO_3)_3 \cdot 5\ H_2O$] in beispielsweise 1,0 bis 4,0 N Salpetersäure oder in Essigsäure herstellen. Wässrige Vanadat-Lösungen lassen sich beispielsweise aus Alkalimetallvanadatsalzen (wie beispielsweise Natrium- oder Kaliumvanadat), Ammoniumvanadat oder durch Auflösen von Vanadium-V-Oxid in basischer Lösung herstellen. Als Molybdat- oder Wolframatsalze verwendet man beispielsweise die entsprechenden Natrium-, Kalium- oder Ammoniumsalze, oder man löst die entsprechenden Oxide in basischer Lösung auf.

Quellen für Erdalkalimetall- oder Zinksalze sind beispielsweise die entsprechenden Chloride, Acetate oder Nitrate.

Die Ausfällungsreaktion der Vorläufer kann batchweise oder kontinuierlich durchgeführt werden. Bevorzugt erfolgt die Vermischung der Lösungen unter gutem Rühren, gegebenenfalls unter hoher Turbulenz, beispielsweise in einem Fliessreaktor, in einer Mischdüse, gegebenenfalls unter erhöhtem Druck, oder in einer mit einem Hochleistungsrührer versehenen Vorrichtung. Das Vermischen der verschiedenen Reaktionslösungen kann sowohl kontinuierlich durch gleichzeitige Zuführung als auch diskontinuierlich durch Vorlage der einen und Zudosierung der anderen Lösung(en) erfolgen.

Die Normalitäten der oben erwähnten sauren und basischen Lösungen werden beispielsweise vor dem Mischen so eingestellt, dass der pH-Wert des entstehenden Reaktionsgemisches zwischen -1 und 6, bevorzugt aber unter 3, liegt.

Der Vorläufer (Pigmentvorstufe) der Verbindungen der Formeln (I) und (II) kann auch durch Vermischen der wässrigen Lösung eines Erdalkalimetall- oder Zinksalzes oder eines Gemisches davon mit der Lösung eines Molybdat- oder Wolframatsalzes oder eines Gemisches davon zur Bildung einer Verbindung der Formel $ADO_4$ hergestellt werden, welche Verbindung dann nach Alterung, gegebenenfalls bei erhöhter Temperatur gleichzeitig oder sequentiell mit der wässrigen Lösung eines Wismuth-III-Salzes und der wässrigen Lösung eines Vanadatsalzes zur Bildung einer erfindungsgemässen Verbindung vermischt wird. Der pH-Wert der verschiedenen Ausgangslösungen ist vorzugsweise so einzustellen, dass er während der Zugabe dieser Lösungen im sauren Bereich, bevorzugt aber nicht über 3, liegt.

Eine Variante des letztgenannten Verfahrens besteht darin, dass die Lösung eines Wismuth-III-Salzes und eines Erdalkalimetall- oder Zinksalzes oder eines Gemisches davon und die wässrige Lösung eines Vanadatsalzes und eines Molybdat- oder Wolframatsalzes oder eines Gemisches davon, gleichzeitig zu Wasser gegeben werden.

In einem neuen, ebenfalls Gegenstand der Erfindung bildenden Verfahren können die Verbindungen der Formeln (I) und (II) auch mit einem einfacheren Verfahren, welches keinen aufwendigen Calzinierungsschritt mehr beinhaltet, hergestellt werden.

Dabei werden die nach den obigen Angaben hergestellten Vorläufer der Verbindungen der Formeln (I) und (II) einem Alterungs- und Kristallisationsprozess in wässriger Phase unterworfen.

Gemäss diesem Verfahren wird wie oben beschrieben die Pigmentvorstufe durch Mischen einer Lösung enthaltend ein Wismuth-III-Salz und ein Erdalkalimetall- oder Zinksalz oder ein Gemisch davon mit einer wässrigen Lösung enthaltend ein Vanadat- und ein Molybdat- oder Wolframatsalz oder ein Gemisch davon hergestellt. Dann wird der pH-Wert der so erhaltenen Suspension durch Zugabe einer anorganischen Base zwischen 5 und 8, vorzugsweise zwischen 6 und 7, eingestellt, und die Suspension wird während mehrerer Stunden gerührt. Dabei erweist sich ein gegebenenfalls stufenweises Erwärmen der Suspension, beispielsweise auf 90-95°C, während oder nach der pH-Erhöhung als vorteilhaft. Zur Steuerung der Teilchengrösse und der Kristallisation der gebildeten Partikel können auch hierfür geeignete Zusätze, beispielsweise Chloride, zugefügt werden. Die Erhöhung des pH-Wertes kann auch stufenweise erfolgen, indem beispielsweise die Suspension zuerst während einiger Zeit, beispielsweise 60 Minuten, bei beispielsweise pH 3,5 gerührt, und erst dann der pH-Wert weiter angehoben wird.

Eine weitere Verfahrensvariante besteht darin, dass man zuerst eine wässrige Lösung enthaltend ein Erdalkalimetall- oder Zinksalz oder ein Gemisch davon mit einer wässrigen Lösung enthaltend ein Molybdat- oder Wolframatsalz oder ein Gemisch davon zur Bildung einer Verbindung der Formel A D $O_4$ vermischt, diese Verbindung dann nach Alterung gleichzeitig oder sequentiell mit einer wässrigen Lösung enthaltend ein Wismuth-III-Salz und einer wässrigen Lösung enthaltend ein Vanadatsalz vermischt, den pH-Wert der erhaltenen Suspension durch Zugabe einer anorganischen Base zwischen 5 und 8, vorzugsweise zwischen 6 und 7, einstellt und die Suspension dann während mehrerer Stunden rührt, wobei A, D und die Molverhältnisse A zu Bi und D zu V die oben angegebene Bedeutung haben.

Geeignete anorganische Basen sind beispielsweise NaOH oder KOH, bevorzugt in Form einer wässrigen Lösung.

Während dieser wässrigen Nachbehandlung wandelt sich der gelartige, amorphe Vorläufer in eine kristalline, brilliant-gelbe Verbindung um, dessen Kristallinität gemäss Pulverröntgendiagramm als gut zu bezeichnen ist. Im allgemeinen sind 2-5 Stunden ausreichend, um eine vollständige Kristallisation zu erzielen.

Bevorzugt wird der pH-Wert der Wismuth-III-Salze und Vanadat-Salze enthaltenden Lösungen so eingestellt, dass der pH-Wert der erhaltenen Suspension während der Zugabe dieser Lösungen im sauren Bereich liegt.

Aehnliche Verfahren zur Herstellung von anorganischen Verbindungen auf Basis von Wismuthvanadat wurden bis jetzt nur in den US-Patentschriften Nr. 4,115,141 und Nr. 4,151,142 beschrieben, wobei phasenreines monoklines $BiVO_4$ hergestellt wird. Die dort angegebenen Bedingungen sind jedoch für die erfolgreiche Herstellung der Verbindungen der Formeln (I) und (II) nicht geeignet, da z.B. eine Alterung bei pH 3,5 zu unbrauchbaren, schmutzig grünlich verfärbten Produkten führt.

Es ist daher überraschend, dass mit dem erfindungsgemässen Verfahren auch die Herstellung von festen Lösungen der obenangegebenen Verbindungen der Formeln (I) und (II) gelingt. Dies ist insbesondere erstaunlich, da Erdalkalivanadate, insbesondere Ca-vanadat, eine recht hohe Löslichkeit aufweisen, während die Wismuthmolybdate oder -wolframate äusserst unlöslich sind. Es ist weiterhin überraschend, dass die Verbindungen den Formeln (I) und (II) nicht in der Kristallstruktur der Hauptkomponente, nämlich des Wismuthvandates, sondern in der tetragonalen Struktur der Verbindung der Formel $ADO_4$ vorliegen, wobei A und D die obenangegebene Definition aufweisen.

Die Aufarbeitung der Verbindungen der Formeln (I) und (II) erfolgt auf übliche Art, beispielsweise durch Abfiltrieren, Auswaschen des Filterkuchens mit Wasser zur Entfernung löslicher Salze, Trocknen und Pulverisieren.

Zur Verbesserung der Pigmenteigenschaften, wie beispielsweise der Stabilität gegen Wärme, Licht und chemische Angriffe, ist es vorteilhaft, die erfingungsgemäss verwendeten Verbindungen der Formeln (I) und (II) während ihrer Herstellung (Fällung) oder durch eine Nachbehandlung nach bekannten, beispielsweise in den US-PS 3,370,971, 3,639,133 und 4,046,588 beschriebenen Verfahren, mit einer anorganischen Schutzhülle zu überziehen. Zu diesem Zweck werden auf der Verbindung der Formeln (I) und (II) anorganische Substanzen, beispielsweise Aluminium-, Titan-, Antimon-, Cerium-, Zirkonium- oder Siliziumverbindungen bzw. Zinkphosphat oder Gemische davon, ausgefällt. Dabei kann diese Ausfällung ein- oder mehrstufig erfolgen. Die Menge des Umhüllungsmittels beträgt zweckmässig 2-40, vorzugsweise 2-20 und insbesondere 3-10 %, bezogen auf das Gesamtgewicht der Verbindung.

Zur Verbesserung bestimmter Pigmenteigenschaften können die Verbindungen der Formeln (I) und (II) zusätzlich noch mit texturverbessernden Mitteln behandelt werden, beispielsweise mit langkettigen aliphatischen Alkoholen, Estern, Säuren oder deren Salzen, Aminen, Amiden, Wachsen oder harzartigen Substanzen, wie Abietinsäure, deren Hydrierungsprodukten, Estern oder Salzen, ferner mit nichtionogenen, anionischen oder kationischen oberflächenaktiven Mitteln.

Die Verbindungen der Formeln (I) und (II) besitzen gute Pigmenteigenschaften und eignen sich ausgezeichnet zum Pigmentieren von hochmolekularen organischen Materialien.

Das erfindungsgemäss zu färbende hochmolekulare organische Material kann natürlicher oder künstlicher Herkunft sein. Es kann sich z.B. um Naturharze oder trocknende Oele, Kautschuk oder Casein oder um abgewandelte Naturstoffe, wie Chlorkautschuk, ölmodifizierte Alkydharze, Viscose, um Celluloseäther oder Ester, wie Celluloseacetat, Cellulosepropionat, Celluloseacetobutyrat oder Nitrocellulose, handeln, insbesondere aber um vollsynthetische organische Polymere (Duro- und Thermoplaste), wie sie durch Polymerisation, Polykondensation oder Polyaddition erhalten werden. Aus der Klasse der Polymerisationsharze seien in erster Linie genannt: Polyolefine, wie Polyäthylen, Polypropylen oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Kopolymerisate der erwähnten Monomeren, insbesondere ABS oder EVA. Aus der Reihe der Polyadditions- und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, ferner die als Lackharze verwendeten Polyester, und zwar sowohl gesättigte, wie z.B. Alkydharze, als auch ungesättigte, wie beispielsweise Maleinatharze, ferner die linearen Polyester, Polyamide und Polycarbonate oder Silikone, genannt. Die erwähnten hochmolekularen Verbindungen können einzeln oder in Gemischen, als plastische Massen oder Schmelzen, die gegebenenfalls zu Fasern versponnen werden können, vorliegen. Sie können auch in gelöster Form als Filmbildner oder Bindemittel für Lacke, Anstrichstoffe oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substanzen mit den Verbindungen der Formeln (I) und (II) erfolgt beispielsweise derart, dass man eine solche Verbindung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Giessen oder Spritzgiessen in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemässen Verfahren vor oder nach der Einverleibung der erfindungsgemässen Verbindungen in die Polymeren eingearbeitet werden. Es ist ferner möglich, zwecks Erzielung verschiedener Farbtöne den hochmolekularen, organischen Stoffen neben den Verbindungen der Formeln (I) und (II) noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die Verbindungen der Formeln (I) und (II) gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die Verbindungen der Formeln (I) und (II) können im erfindungsgemäss in Frage kommenden Material beispielsweise in einer Menge von 0,001 bis 40 Gew.%,bezogen auf das Material, insbesondere aber von 0,01 bis 20 Gew.%. vorliegen.

In Färbungen, beispielsweise von Kunststoffen, Fasern, Lacken, Anstrichstoffen oder Drucken, zeichnen sich die Verbindungen der Formeln (I) und (II) durch gute allgemeine Pigmenteigenschaften, wie gute Dispergierbarkeit, hohe Farbstärke, Reinheit, hohe Deckkraft, gute Ueberlackier-, Migrations-, Hitze-, Licht- und Wetterbeständigkeit, sowie gute Beständigkeit gegen Chemikalien, wie Säuren, Basen, organische Lösungsmittel und Industrieatmosphäre, aus. Ausserdem verleihen sie den daraus hergestellten Druckfarben, Anstrichstoffen und Lacken ein gutes rheologisches Verhalten und den getrockneten Filmen einen guten Glanz.

In den nachfolgenden Beispielen bedeuten die Prozente Gewichtsprozente. Die Zusammensetzung der Verbindungen wird dabei durch Elementaranalysen und daraus errechnete Molverhältnisse A zu Bi und D zu V angegeben. Der Gehalt an Wismuth-III-Oxid wird aus den übrigen, direkt bestimmten Gehalten berechnet.

Beispiel 1: Eine wässrige Lösung enthaltend 5,61 g $Ca(NO_3)_2•4H_2O$ und eine wässrige Lösung enthaltend 5,7 g $Na_2MoO_4•2H_2O$ werden unter gutem Rühren bei Raumtemperatur vermischt, und der entstandene Niederschlag bestehend aus $CaMoO_4$ wird während einer Stunde bei dieser Temperatur gealtert. Anschliessend wird die Suspension auf 90°C erhitzt, worauf die folgenden Lösungen dieser Suspension simultan und innert 30 Minuten zugegeben werden:

289 ml 1N-$HNO_3$ enthaltend 46,08 g $Bi(NO_3)_3•5H_2O$ und

289 ml Wasser enthaltend 13,29 g $NaVO_3•H_2O$ und 12 g NaOH; (End pH-Wert:3).

Der pH-Wert der so erhaltenen Suspension wird mittels einer 30%igen NaOH-Lösung auf 6 gestellt, und die Suspension wird während drei Stunden bei 90°C gerührt. Anschliessend wird das erhaltene Produkt filtriert, mit kaltem Wasser gut gewaschen und im Vakuumtrockenschrank bei 95°C getrocknet. Man erhält 34,4 g eines brillanten grün-gelben Pulvers mit folgender Elementaranalyse:

Ca: 2,7 %; V: 12,9 % Mo: 5,4 %.

Dies ergibt die folgenden Molverhältnisse:

Ca zu Bi = 0,24 ; Mo zu V: 0,22.

Das Röntgendiagramm zeigt eine tetragonale Struktur.

Beispiel 2: (Bi, Ca) (V, Mo)$O_4$ mit einem Substitutionsgrad von ca. 20 Mol%.

19,4 g $Bi(NO_3)_3•5\ H_2O$ und 2,36 g $Ca(NO_3)_2•4\ H_2O$ werden in 120 ml 1N $HNO_3$ gelöst. Unter Rühren wird eine Lösung von 5,6 g $NaVO_3•H_2O$, 2,42 g $Na_2MoO_4•2\ H_2O$ und 4 g NaOH in 120 ml Wasser zugegeben. Der pH-Wert der so erhaltenen Suspension liegt bei ca. 0,2 und wird mit 30%iger Natronlauge auf 3,5 gestellt. Anschliessend wird die Suspension während 1 Std. bei diesem pH-Wert und Raumtemperatur gerührt. Danach wird durch langsame Zugabe von 1N Natronlauge der pH über einen Zeitraum von einer Stunde auf 6 erhöht. Anschliessend wird die Suspension zum Rückfluss erhitzt, wobei der pH-Wert dieser Suspension durch weitere Zugabe von 1N Natronlauge bei 6 gehalten wird (z.B. mit Hilfe eines pH-Staten). Der pH wird solange bei 6 konstant gehalten bis sich die Suspension gelb zu verfärben beginnt und ein spontaner pH Anstieg auftritt. Die Pigmentsuspension wird dann noch 2 Stunden unter Rückfluss gerührt, wobei der pH-Wert auf ca. 8 ansteigt, anschliessend wird sie abfiltriert, der Rückstand wird salzfrei gewaschen und bei 90°C im Vakuumtrockenschrank getrocknet. Man erhält 14 g eines leuchtendgelben Pigmentpulvers mit folgender Elementaranalyse:

Ca: 2,6 %; V: 13,2 % Mo: 6,6 %.

Dies ergibt die folgenden Molverhältnisse:

Ca zu Bi = 0,24 ; Mo zu V: 0,27.

Das Röntgendiagramm zeigt eine tetragonale Struktur.

Beispiel 3: Herstellung von (Bi, Ca) (V, Mo)$O_4$ mit einem Substitutionsgrad von 10-30 Mol%.

a) Es wird wie in Beispiel 2 verfahren, doch werden die folgenden Substanzmengen eingesetzt: 174,6 g $Bi(NO_3)_3•5\ H_2O$ und 9,45 g $Ca(NO_3)_2•4\ H_2O$ in 360 ml 1N $HNO_3$; 50,38 g $NaVO_3•H_2O$, 9,69 g $Na_2MoO_4•2\ H_2O$ und 12,0 g NaOH in 360 ml Wasser. Es werden 121,3 g Pigment erhalten:

Analyse des erhaltenen Produktes:

Ca: 1,2 %; V: 13,4 % Mo: 1,5 %.

Dies ergibt die folgenden Molverhältnisse:

Ca zu Bi = 0,10 ; Mo zu V: 0,06.

Die röntgenographische Untersuchung zeigt, dass das Pigment in einer tetragonalen Struktur vorliegt.

b) Es wird wiederum wie in Beispiel 2 verfahren, doch werden die folgenden Substanzmengen eingesetzt: 135,82 g $Bi(NO_3)_3 \cdot 5\ H_2O$, 28,34 g $Ca(NO_3)_2 \cdot 4\ H_2O$ in 280 ml 1N $HNO_3$ und 39,18 g $NaVO_3 \cdot H_2O$, 29,03 g $Na_2MoO_4 \cdot 2\ H_2O$ und 12 g NaOH in 360 ml Wasser. Ausbeute: 113,5 g.
Analysen: Ca: 4,0 %; V: 11,3 %; Mo: 8,5 %;
Dies ergibt die folgenden Molverhältnisse:
Ca zu Bi = 0,38; Mo zu V = 0,4.
Röntgen: tetrgonale Kristallstruktur.

Beispiel 4: Herstellung von (Bi, Ca) (V, W)$O_4$ mit einem Substitutionsgrad von ca. 10-20 Mol%.

a) 174,6 g $Bi(NO_3)_3 \cdot 5\ H_2O$ und 9,45 g $Ca(NO_3)_2 \cdot 4\ H_2O$ werden in 360 ml 1N $HNO_3$ gelöst. Unter Rühren wird eine Lösung enthaltend 50,38 g $NaVO_3 \cdot H_2O$, 13,19 g $Na_2WO_4 \cdot 2\ H_2O$ und 12 g NaOH in 360 ml Wasser zugegeben. Anschliessend wird wie in Beispiel 2 angegeben verfahren. Man erhält 125,2 g eines gelben Pigmentes mit den folgenden Analysewerten:
Ca: 1,2 %: V: 13,2 %; W 3,4 %.
Dies ergibt die folgenden Molverhältnisse:
Ca zu Bi = 0,10; W zu V = 0,07.
Laut Röntgendiagramm liegt die Substanz in einer tetragonalen Kristallstruktur vor.

b) Analog dem in Beispiel 2 beschriebenen Verfahren werden die folgenden Substanzmengen eingesetzt:
155,22 g $Bi(NO_3)_3 \cdot 5\ H_2O$ und 18,9 g $Ca(NO_3)_2 \cdot 4\ H_2O$ in 280 ml 1N $HNO_3$; 44,78 g $NaVO_3 \cdot H_2O$, 26,38 g $Na_2WO_4 \cdot 2\ H_2O$ und 12 g NaOH in 360 ml Wasser. Es werden 123,9 g Pigment erhalten.
Analyse:
Ca: 2,5 %: V: 12,1 %; W 9,5 %.
Dies ergibt die folgenden Molverhältnisse:
Ca zu Bi = 0,23; W zu V = 0,22.
Röntgen: tetragonale Kristallstruktur.

Beispiel 5: Herstellung von (Bi, Sr) (V, Mo)$O_4$ mit einem Substitutionsgrad von ca. 20 Mol%.

155,22 g $Bi(NO_3)_3 \cdot 5\ H_2O$ und 16,93 g $Sr(NO_3)_2$ werden in 960 ml 1N $HNO_3$ gelöst. Unter Rühren wird eine Lösung enthaltend 44,78 g $NaVO_3 \cdot H_2O$, 19,26 g $Na_2MoO_4 \cdot 2\ H_2O$ und 32 g NaOH in 950 ml Wasser zugegeben. Anschliessend wird wie in Beispiel 2 beschrieben verfahren.

Man erhält 120,5 g Pigment.
Analysen:
Sr: 6,5 %: V: 12,1 %; Mo 5,5 %.
Dies ergibt die folgenden Molverhältnisse:
Sr zu Bi = 0,28; Mo zu V = 0,24.
Röntgen: tetragonale Kristallstruktur.

Beispiel 6: Herstellung von (Bi, Zn) (V, Mo)$O_4$ mit einem Substitutionsgrad von ca. 20 Mol%.

19,4 g $Bi(NO_3)_3 \cdot 5\ H_2O$ und 2,61 g $Zn(NO_3)_2 \cdot 4\ H_2O$ werden in 120 ml 1N $HNO_3$ gelöst. Unter Rühren wird eine Lösung enthaltend 5,6 g $NaVO_3 \cdot H_2O$, 2,42 g $Na_2MoO_4 \cdot 2\ H_2O$ und 4 g NaOH in 120 ml Wasser zugegeben. Anschliessend wird wie in Beispiel 2 angegeben verfahren.

Man erhält 13,3 g eines gelben Pigmentes.
Analysen:
Zn: 4,3 %: V: 13,5 %; Mo 2,9 %.
Dies ergibt die folgenden Molverhältnisse:
Zu zu Bi = 0,23; Mo zu V = 0,11.
Röntgen: tetragonale Kristallstruktur.

Beispiel 7: Herstellung von (Bi, Ba) (V, Mo)$O_4$ mit einem Substitutionsgrad von ca. 20 Mol%.

19,4 g $Bi(NO_3)_3 \cdot 5\ H_2O$ und 2,61 g $Ba(NO_3)_2$ werden in 120 ml 1N $HNO_3$ gelöst. Unter Rühren wird eine Lösung enthaltend 5,60 g $NaVO_3 \cdot H_2O$, 2,42 g $Na_2MoO_4 \cdot 2\ H_2O$ und 4 g NaOH und 4 g NaOH in 120 ml Wasser zugegeben. Anschliessend wird wie in Beispiel 2 angegeben verfahren, wobei aber zur Alterung des Pigmentes nicht 2 sondern 5 Stunden gerührt wird.

Man erhält 15,2 g eines grünstichig gelben Pigmentes.
Analysen:
Ba: 7,62 %: V: 12,2 %; Mo 5,5 %.
Dies ergibt die folgenden Molverhältnisse:
Ba zu Bi = 0,21; Mo zu V = 0,24.
Röntgen: tetragonale Kristallstruktur.

Beispiel 8: Herstellung von (Bi, Ca)$VO_4$ mit einem Substitutionsgrad von ca. 10 Mol%.

43,65 g $Bi(NO_3)_3 \cdot 5\ H_2O$ und 3,54 g $Ca(NO_3)_2 \cdot 4\ H_2O$ werden in 290 ml 1N $HNO_3$ gelöst. Unter Rühren wird eine Lösung enthaltend 13,9 g $NaVO_3 \cdot H_2O$ und 8 g NaOH in 300 ml Wasser zugegeben. Nach Beendigung der Zugabe wird der pH mit 30%iger Natronlauge auf 3 gestellt und die Suspension auf 95°C erwärmt. Nach dreistündigem Rühren wird der pH durch Zugabe von 1N Natronlauge auf 6 erhöht und die Suspension noch während 5 Stunden bei 95°C gerührt.

Nach üblicher Isolierung und Trocknung der Suspension erhält man 30 g eines gelben Pigmentes.
Analysen:
Ca: 1,50 %: V: 15,50 %;
Dies ergibt die folgenden Molverhältnisse:
Ca zu Bi = 0,12.
Laut Pulverröntgendiagramm besitzt das Pigment eine tetragonale Kristallstruktur.

Beispiel 9: Herstellung eines mit $SiO_2$ umhüllten (Bi, Ca) (V, Mo)$O_4$ Pigmentes.

10 g eines gemäss Beispiel 2 hergestellten Pigmentes werden in 100 ml Wasser enthaltend 1,6 g Wasserglas (26,5 % $SiO_2$, $SiO_2$:$Na_2O$ = 3,25) während 16 Std. vordispergiert. Die Suspension wird dann mit einem Manton-Gaulin Hochdruckhomogenisator bei einem Druck von $202{,}6 \cdot 10^5$ Pa (= ca. 200 atm) in einem Durchgang dispergiert. Die Suspension wird auf 90°C erhitzt, und die folgenden Lösungen werden über einen Zeitraum von 4 Stunden simultan zudosiert.
- 7 g Wasserglas in 50 ml Wasser,
- 16,3 ml 1N $H_2SO_4$ in 50 ml Wasser.

Nach Beendigung der Zugabe beträgt der pH-Wert der Suspension 9,7. Diese Suspension wird noch während 2 Stunden gerührt und der pH dann durch Zugabe von 1N $H_2SO_4$ auf ca. 6,2 gestellt. Anschliessend wird eine Lösung enthaltend 1 g Dioctyladipat und 0,5 g Dodecylsulfonsäure-Na-salz in ca 10 ml Wasser (dispergiert mit Ultraschall) zugegeben. Nach 15 Minuten werden 15 ml einer 25%igen $Al_2\ (SO_4)_3 \cdot 18\ H_2O$ Lösung in Wasser zugegeben,

worauf der pH auf 2,4 sinkt. Durch langsame Zugabe von 1N NaOH wird der pH der Suspension auf 3,1 gestellt, das Produkt wird dann abfiltriert, salzfrei gewaschen und getrocknet.

Beispiel 10: Anwendungsbeispiel in HDPE: 3 g des erfingungsgemässen Pigmentes gemäss Beispiel 2 und 1000 g ®Vestolen 6016 (Lieferant: HUELS) werden in eine 3 1 Glasflasche eingewogen und während 2 Stunden trocken vermischt. Anschliessend wird das Gemisch zweimal bei 200°C extrudiert und dann granuliert. Schliesslich werden auf einer Spritzgussmaschine 1,5 mm dicke Plättchen hergestellt, wobei zur Prüfung der Hitzebeständigkeit die Spritzgussmasse jeweils 5 Minuten einer Temperatur zwischen 220°C und 300°C ausgesetzt wird. Das Pigment zeichnet sich durch eine ausgezeichnete Hitzebeständigkeit aus.

Beispiel 11: (Anwendungsbeispiel in PVC): 0,5 g des gemäss Beispiel 1 erhaltenen Pigments werden mit 76 g Polyvinylchlorid, 33 g Dioctylphthalat, 2 g Dibutylzinndilaurat und 2 g Titandioxid zusammengemischt und auf dem Walzenstuhl während 15 Minuten bei 160°C zu einer dünnen Folie verarbeitet. Die so erzeugte grünstichig gelbe Färbung ist farbstark, gut deckend, migrations- und lichtbeständig.

Beispiel 12: (Anwendung in einem Alkyld-Melamin-Einbrennlack): 60 g einer 60%igen Lösung eines nicht-trocknenden Alkydharzes in Xylol (Handelsname ®Beckosol 27-320 der Firma Reichhold-Albert-Chemie), 36 g einer 50-%igen Lösung eines Melamin-Formaldehyd-Harzes in einem Butanol-Xylol-Gemisch (Handelsname ®Super-Beckamin 13-501 der Firma Reichhold-Albert-Chemie), 2 g Xylol und 2 g Methylcellosolve werden vermischt, und 100 g dieses Gemisches werden mit Hilfe eines Rührers zu einer homogenen Lacklösung verrührt.

30 g des so erhaltenen Klarlackes, 10 g des gemäss Beispiel 1 erhaltenen Pigmentes, 9 ml Methylisobutylketon und 135 g Glasperlen (4,5 mm Durchmesser) werden während 16 Stunden auf einer Vibratom-Schwingmühle (der Firma Siebtechnik, Mülheim/Ruhr, Deutschland) dispergiert. Der so erhaltene Lack wird mit einem Erichsen-Filmziehgerät (Typ 238/1) auf einem mit einem Vinyllack beschichteten Aluminiumstreifen ausgezogen, der erhaltene Lackfilm wird dann während einer Stunde abgelüftet und während 30 Minuten bei 130°C eingebrannt. Man erhält eine brilliante, grünstichig-gelbe und lichtbeständige Lackierung.

**Patentansprüche für die Vertragsstaaten: BE, CH, DE, FR, GB, IT, LI, NL**

1. Verfahren zum Färben von hochmolekularem organischem Material in der Masse, dadurch gekennzeichnet, dass man eine Verbindung der allgemeinen Formel (I)

$(Bi,A)(V,D)O_4$ (I)

in einer tetragonalen, scheelitartiger Kristallstruktur verwendet, worin A ein Erdalkalimetall, Zn oder ein Gemisch davon, V Vanadiubme und D Mo, W oder ein Gemisch davon bedeuten, und das Molverhältnis A zu Bi zwischen 0,1 und 0,4 und das Molverhältnis D zu V zwischen 0 und 0,4 liegen.

2. Verfahren gemäss Anspruch 1, dadurch gekennzeichnet, dass man eine Verbindung der Formel (I) verwendet, worin die Molverhältnisse A zu B und D zu V zwischen 0,1 und 0,3 liegen.

3. Verfahren gemäss Anspruch 1, dadurch gekennzeichnet, dass man eine Verbindung der Formel (I) verwendet, worin A Ca oder Sr und D Mo oder W bedeuten, und die Molverhältnisse A zu Bi und D zu V zwischen 0,15 und 0,3 liegen.

4. Verfahren gemäss Anspruch 1, dadurch gekennzeichnet, dass man eine Verbindung der Formel (I) verwendet, worin A Ca und D Mo bedeuten, und die Molverhältnisse Ca zu Bi und Mo zu V zwischen 0,15 und 0,3 liegen.

5. Verbindungen der allgemeinen Formel (II)

$(Bi,A)(V,D)O_4$ (II)

in einer tetragonalen, scheelitartigen Kristallstruktur, worin A ein Erdalkalimetall, Zn oder ein Gemisch davon, V Vanadium und D Mo, W oder ein Gemisch davon bedeuten und das Molverhältnis A zu Bi zwischen 0,1 und 0,4 und das Molverhältnis D zu V zwischen 0 und 0,4 liegen, wobei D nicht W darstellen darf, wenn A Ca bedeutet.

6. Verbindungen der Formel (II) gemäss Anspruch 5, worin die Molverhältnisse A zu Bi und D zu V zwischen 0,1 und 0,3 liegen.

7. Verbindungen der Formel (II) gemäss Anspruch 5, worin A Ca und D Mo bedeuten, und die Molverhältnisse Ca zu Bi und Mo zu V zwischen 0,15 und 0,3 liegen.

8. Verfahren zur Herstellung der Verbindungen der Formel (I) gemäss Anspruch 1, dadurch gekennzeichnet, dass man eine Lösung enthaltend ein Wismuth-III-Salz und ein Erdalkalimetall- oder Zinksalz oder ein Gemisch davon mit einer wässrigen Lösung enthaltend ein Vanadatsalz und ein Molybdat- oder Wolframatsalz oder ein Gemisch davon vermischt, dann den pH-Wert der erhaltenen Suspension durch Zugabe einer anorganischen Base zwischen 5 und 8 einstellt, und die Suspension während mehreren Stunden rührt, wobei A, D und die Molverhältnisse A zu Bi und D zu V im Anspruch 1 angegebene Bedeutung haben.

9. Verfahren zur Herstellung der Verbindungen der Formel (I) gemäss Anspruch 1, dadurch gekennzeichnet, dass man zuerst eine wässrige Lösung enthaltend ein Erdalkalimetall- oder Zinksalz oder ein Gemisch davon mit einer wässrigen Lösung enthaltend ein Molybdat-oder Wolframatsalz oder ein Gemisch davon zur Bildung einer Verbindung der Formel A D $O_4$ vermischt, diese Verbindung dann nach Alterung gleichzeitig oder sequentiell mit einer wässrigen Lösung enthaltend ein Wismuth-III-Salz und einer wässrigen Lösung enthaltend ein Vanadatsalz vermischt, den pH-Wert der erhaltenen Suspension durch Zugabe einer anorganischen Base zwischen 5 und 8 einstellt, und die Suspension während mehrerer Stunden rührt, wobei A, D und die Molverhältnisse A zu Bi und D zu V die im Anspruch 1 angegebene Bedeutung haben.

10. Verfahren gemäss Anspruch 8 oder 9, dadurch gekennzeichnet, dass der pH-Wert der Wismuth-III-Salze und Vanadat-Salze enthaltenden Lösungen so eingestellt wird, dass der pH-Wert der

erhaltenen Suspension während der Zugabe dieser Lösungen im sauren Bereich liegt.

11. Verfahren gemäss Anspruch 8 oder 9, dadurch gekennzeichnet, dass man die erhaltenen Verbindungen der Formel (I) mit einer anorganischen Schutzhülle überzieht.

12. Verwendung der Verbindungen der Formel (I) gemäss Anspruch 1 zum Einfärben von hochmolekularem organischem Material.

13. Hochmolekulares organisches Material enthaltend eine Verbindung der Formel (I) gemäss Anspruch 1.

**Patentansprüche für den Vertragsstaat ES**

1. Verfahren zum Färben von hochmolekularem organischem Material in der Masse, dadurch gekennzeichnet, dass man eine Verbindung der allgemeinen Formel (I)

$(Bi,A)\,(V,D)O_4$ (I)

in einer tetragonalen, scheelitartigen Kristallstruktur verwendet, worin A ein Erdalkalimetall, Zn oder ein Gemisch davon, V Vanadium und D Mo, W oder ein Gemisch davon bedeuten, und das Molverhältnis A zu Bi zwischen 0,1 und 0,4 und das Molverhältnis D zu V zwischen 0 und 0,4 liegen.

2. Verfahren gemäss Anspruch 1, dadurch gekennzeichnet, dass man eine Verbindung der Formel (I) verwendet, worin die Molverhältnisse A zu B und D zu V zwischen 0,1 und 0,3 liegen.

3. Verfahren gemäss Anspruch 1, dadurch gekennzeichnet, dass man eine Verbindung der Formel (I) verwendet, worin A Ca oder Sr und D Mo oder W bedeuten, und die Molverhältnisse A zu Bi und D zu V zwischen 0,15 und 0,3 liegen.

4. Verfahren gemäss Anspruch 1, dadurch gekennzeichnet, dass man eine Verbindung der Formel (I) verwendet, worin A Ca und D Mo bedeuten, und die Molverhältnisse Ca zu Bi und Mo zu V zwischen 0, 15 und 0, 3 liegen.

5. Verfahren zur Herstellung der Verbindungen der Formel (I) gemäss Anspruch 1, dadurch gekennzeichnet, dass man eine Lösung enthaltend ein Wismuth-III-Salz und ein Erdalkalimetall- oder Zinksalz oder ein Gemisch davon mit einer wässrigen Lösung enthaltend ein Vanadatsalz und ein Molybdat- oder Wolframatsalz oder ein Gemisch davon vermischt, dann den pH-Wert der erhaltenen Suspension durch Zugabe einer anorganischen Base zwischen 5 und 8 einstellt, und die Suspension während mehreren Stunden rührt, wobei A, D und die Molverhältnisse A zu Bi und D zu V die im Anspruch 1 angegebene Bedeutung haben.

6. Verfahren zur Herstellung der Verbindungen der Formel (I) gemäss Anspruch 1, dadurch gekennzeichnet, dass man zuerst eine wässrige Lösung enthaltend ein Erdalkalimetall- oder Zinksalz oder ein Gemisch davon mit einer wässrigen Lösung enthaltend ein Molybdat oder Wolframatsalz oder ein Gemisch davon zur Bildung einer Verbindung der Formel A D 04 vermischt, diese Verbindung dann nach Alterung gleichzeitig oder sequentiell mit einer wässrigen Lösung enthaltend ein Wismuth-III-Salz und einer wässrigen Lösung enthaltend ein Vanadatsalz vermischt, den pH-Wert der erhaltenen Suspension durch Zugabe einer anorganischen Base zwischen 5 und 8 einstellt, und die Suspension während mehrerer Stunden rührt, wobei A, D und die Molverhältnisse A zu Bi und D zu V die im Anspruch 1 angegebene Bedeutung haben.

7. Verfahren gemäss Anspruch 5 oder 6, dadurch gekennzeichnet, dass der pH-Wert der Wismuth-III-Salze und Vanadat-Salze enthaltenden Lösungen so eingestellt wird, dass der pH-Wert der erhaltenen Suspension während der Zugabe dieser Lösungen im sauren Bereich liegt.

8. Verfahren gemäss Anspruch 5 oder 6 dadurch gekennzeichnet, dass man die erhaltenen Verbindungen der Formel (I) mit einer anorganischen Schutzhülle überzieht.

9. Verwendung der Verbindungen der Formel (I) gemäss Anspruch 1 zum Einfärben von hochmolekularem organischem Material.

**Claims for the Contracting States: BE, CH, DE, FR, GB, IT, LI, NL**

1. A process for mass colouring high molecular weight organic material, which comprises using a compound of the general formula (I)

$(Bi,A)\,(V,D)O_4$ (I)

in a tetragonal, scheelitelike crystal structure, in which A is an alkaline earth metal, Zn or a mixture thereof, V is vanadium, D is Mo, W or a mixture thereof, the molar ratio A:Bi is between 0.1 and 0.4, and the molar ratio D:V is between 0 and 0.4.

2. A process according to claim 1, wherein, in the compound of the formula (I) used, the molar ratios A:B and D:V are between 0.1 and 0.3.

3. A process according to claim 1, wherein, in the compound of the formula (I) used, A is Ca or Sr, D is Mo or W, and the molar ratios A:Bi and D:V are between 0.15 and 0.3.

4. A process according to claim 1, wherein, in the compound of the formula (I) used, A is Ca, D is Mo and the molar ratios Ca:Bi and Mo:V are between 0.15 and 0.3.

5. A compound of the general formula (II)

$(Bi,A)\,(V,D)O_4$ (II)

in a tetragonal, scheelitelike crystal structure, in which A is an alkaline earth metal, Zn or a mixture thereof, V is vanadium, D is Mo, W or a mixture thereof, the molar ratio A:Bi is between 0.1 and 0.4 and the molar ratio D:V is between 0 and 0.4, although D must not be W when A is Ca.

6. A compound of the formula (II) according to claim 5, in which the molar ratios A:Bi and D:V are between 0.1 and 0.3.

7. A compound of the formula (II) according to claim 5, in which A is Ca, D is Mo and the molar ratios Ca:Bi and Mo:V are between 0.15 and 0.3.

8. A process for preparing a compound of the formula (I) according to claim 1, which comprises mixing a solution containing a bismuth (III) salt and an alkaline earth metal or zinc salt or a mixture thereof with an aqueous solution containing a vanadate salt and a molybdate or tungstenate salt or a mixture thereof, then adjusting the pH of the resulting suspension to between 5 and 8 by adding an inorganic base, and stirring the suspension for several

hours, A, D and the molar ratios A:Bi and D:V being as defined in claim 1.

9. A process for preparing a compound of the formula (I) according to claim 1, which comprises first mixing an aqueous solution containing an alkaline earth metal or zinc salt or a mixture thereof with an aqueous solution containing a molybdate or a tungstenate salt or a mixture thereof to form a compound of the formula $ADO_4$, then, after ageing, mixing this compound simultaneously or sequentially with an aqueous solution containing a bismuth (III) salt and an aqueous solution containing a vanadate salt, adjusting the pH of the resulting suspension to between 5 and 8 by adding an inorganic base, and stirring the suspension for several hours, A, D and the molar ratios A:Bi and D:V being as defined in claim 1.

10. A process according to either of claims 8 or 9, wherein the pH of the solutions containing bismuth (III) salts and vanadate salts is adjusted in such a way that the pH of the resulting suspension is within the acid range during the addition of these solutions.

11. A process according to claim 8 or 9, wherein the resulting compounds of the formula (I) are coated with an inorganic protective coating.

12. Use of the compounds of the formula (I) according to claim 1, for colouring high molecular weight organic material.

13. High molecular weight organic material containing a compound of the formula (I) according to claim 1.

**Claims for the Contracting State ES**

1. A process for mass colouring high molecular weight organic material, which comprises using a compound of the general formula (I)

$(Bi,A)\ (V,D)O_4$ (I)

in a tetragonal, scheelitelike crystal structure, in which A is an alkaline earth metal, Zn or a mixture thereof, V is vanadium, D is Mo, W or a mixture thereof, the molar ratio A:Bi is between 0.1 and 0.4, and the molar ratio D:V is between 0 and 0.4.

2. A process according to claim 1, wherein, in the compound of the formula (I) used, the molar ratios A:B and D:V are between 0.1 and 0.3.

3. A process according to claim 1, wherein, in the compound of the formula (I) used, A is Ca or Sr, D is Mo or W, and the molar ratios A:Bi and D:V are between 0.15 and 0.3.

4. A process according to claim 1, wherein, in the compound of the formula (I) used, A is Ca, D is Mo and the molar ratios Ca:Bi and Mo:V are between 0.15 and 0.3.

5. A process for preparing a compound of the formula (I) according to claim 1, which comprises mixing a solution containing a bismuth (III) salt and an alkaline earth metal or zinc salt or a mixture thereof with an aqueous solution containing a vanadate salt and a molybdate or tungstenate salt or a mixture thereof, then adjusting the pH of the resulting suspension to between 5 and 8 by adding an inorganic base, and stirring the suspension for several hours, A, D and the molar ratios A:Bi and D:V being as defined in claim 1.

6. A process for preparing a compound of the formula (I) according to claim 1, which comprises first mixing an aqueous solution containing an alkaline earth metal or zinc salt or a mixture thereof with an aqueous solution containing a molybdate or a tungstenate salt or a mixture thereof to form a compound of the formula $ADO_4$, then, after ageing, mixing this compound simultaneously or sequentially with an aqueous solution containing a bismuth (III) salt and an aqueous solution containing a vanadate salt, adjusting the pH of the resulting suspension to between 5 and 8 by adding an inorganic base, and stirring the suspension for several hours, A, D and the molar ratios A:Bi and D:V being as defined in claim 1.

7. A process according to either of claims 5 or 6, wherein the pH of the solutions containing bismuth (III) salts and vanadate salts is adjusted in such a way that the pH of the resulting suspension is within the acid range during the addition of these solutions.

8. A process according to claim 5 or 6, wherein the resulting compounds of the formula (I) are coated with an inorganic protective coating.

9. Use of the compounds of the formula (I) according to claim 1, for colouring high molecular weight organic material.

**Revendications pour les Etats Contractants: BE, CH, DE, FR, GB, IT, LI, NL**

1. Procédé de coloration dans la masse de matières organiques macromoléculaires, procédé caractérisé en ce que l'on utilise comme pigment un composé de formule I ci-dessous:

$(Bi,A)(V,D)O_4$

en une structure cristalline tétragonale du genre de celle de la scheelite, formule dans laquelle A représente un métal alcalino-terreux ou le zinc ou plusieurs de ces métaux à la fois, V le vanadium et D le molybdène ou le tungstène ou les deux, dans un rapport molaire de A à Bi compris entre 0,1 à 0,4 et dans un rapport molaire de D à V compris entre 0 et 0,4.

2. Procédé selon la revendication 1, caractérisé en ce que l'on utilise un composé de formule I dans lequel les rapports molaires de A à B et de D à V sont compris chacun entre 0,1 et 0,3.

3. Procédé selon la revendication 1, caractérisé en ce que l'on utilise un composé de formule I dans lequel A est le calcium ou le strontium et D le molybdène ou le tungstène, et les rapports molaires de A à Bi et de D à V sont compris chacun entre 0,15 et 0,3.

4. Procédé selon la revendication 1, caractérisé en ce que l'on utilise un composé de formule I dans lequel A est le calcium et D le molybdène et les rapports molaires de Ca à si et de Mo à V sont compris chacun entre 0,15 et 0,3.

5. Les composés de formule générale II;

$(Bi,A)\ (V,D)O_4$

en une structure cristalline tétragonale analogue à celle de la scheelite, formule dans laquelle A représente un métal alcalino-terreux ou le zinc ou plusieurs de ces métaux à la fois, V le vanadium et D le

molybdène ou le tungstène ou les deux à la fois, et le rapport molaire de A à Bi est compris entre 0,1 et 0,4 et celui de D à V entre 0 et 0,4, D ne devant pas être le tungstène si A est le calcium.

6. Composés de formule II selon la revendication 5 dans lesquels les rapports molaires de A à Bi et de D à V sont compris chacun entre 0,1 et 0,3.

7. Composés de formule II selon la revendication 5 dans lesquels A est le calcium et D le molybdène et les rapports molaires de Ca à Bi et de Mo à V sont compris chacun entre 0,15 et 0,3.

8. Procédé de préparation des composés de formule I de la revendication 1, procédé caractérisé en ce que l'on mélange une solution d'un sel de bismuth trivalent et d'un sel de métal alcalino-terreux ou de zinc ou de plusieurs de ces derniers sels avec une solution aqueuse d'un vanadate et d'un molybdate ou d'un tungstate ou à la fois d'un molybdate et d'un tungstate, on ajuste le pH de la suspension formée entre 5 et 8 en lui ajoutant une base minérale puis on l'agite pendant plusieurs heures.

9. Procédé de préparation des composés de formule I de la revendication 1, procédé caractérisé en ce que l'on commence par mélanger une solution aqueuse d'un sel de métal alcalino-terreux ou de zinc ou de plusieurs de ces sels avec une solution aqueuse d'un molybdate et d'un tungstate ou à la fois d'un molybdate et d'un tungstate pour former un composé de formule A D $O_4$, composé que l'on vieillit puis que l'on mélange, en même temps ou successivement, avec une solution aqueuse d'un sel de bismuth trivalent et avec une solution aqueuse d'un vanadate, on ajuste ensuite la suspension formée à un pH de 5 à 8 en lui ajoutant une base minérale puis on l'agite pendant plusieurs heures.

10. Procédé selon la revendication 8 ou 9, caractérisé en ce que l'on ajuste le pH des solutions du sel de bismuth trivalent et du vanadate à une valeur telle que le pH de la suspension formée au cours de l'addition de ces solutions soit dans le domaine acide.

11. Procédé selon la revendication 8 ou 9, caractérisé en ce que l'on enrobe les composés obtenus de formule I d'une couche protectrice d'une matière minérale.

12. L'emploi des composés de formule I de la revendication 1 pour la coloration dans la masse de matières organiques macromoléculaires.

13. Matières organiques macromoléculaires qui contiennent un composé de formule I de la revendication 1.

**Revendications pour l'Etat Contractant ES**

1. Procédé de coloration dans la masse de matières organiques macromoléculaires, procédé caractérisé en ce que l'on utilise comme pigment un composé de formule I ci-dessous:

$(Bi,A)\ (V,D)0_4$

en une structure cristalline tétragonale du genre de celle de la scheelite, formule dans laquelle A représente un métal alcalino-terreux ou le zinc ou plusieurs de ces métaux à la fois, V le vanadium et D le molybdène ou le tungstène ou les deux, dans un rapport molaire de A à Bi compris entre 0,1 à 0,4 et dans un rapport molaire de D à V compris entre 0 et 0,4.

2. Procédé selon la revendication 1, caractérisé en ce que l'on utilise un composé de formule I dans lequel les rapports molaires de A à B et de D à V sont compris chacun entre 0,1 et 0,3.

3. Procédé selon la revendication 1, caractérisé en ce que l'on utilise un composé de formule I dans lequel A est le calcium ou le strontium et D le molybdène ou le tungstène, et les rapports molaires de A à si et de D à V sont compris chacun entre 0,15 et 0,3.

4. Procédé selon la revendication 1, caractérisé en ce que l'on utilise un composé de formule I dans lequel A est le calcium et D le molybdène et les rapports molaires de Ca à Bi et de Mo à V sont compris chacun entre 0,15 et 0,3.

5. Procédé de préparation des composés de formule I de la revendication 1, procédé caractérisé en ce que l'on mélange une solution d'un sel de bismuth trivalent et d'un sel de métal alcalino-terreux ou de zinc ou de plusieurs de ces derniers sels avec une solution aqueuse d'un vanadate et d'un molybdate ou d'un tungstate ou à la fois d'un molybdate et d'un tungstate, on ajuste le pH de la suspension formée entre 5 et 8 en lui ajoutant une base minérale puis on l'agite pendant plusieurs heures.

6. Procédé de préparation des composés de formule I de la revendication 1, procédé caractérisé en ce que l'on commence par mélanger une solution aqueuse d'un sel de métal alcalino-terreux ou de zinc ou de plusieurs de ces sels avec une solution aqueuse d'un molybdate et d'un tungstate ou à la fois d'un molybdate et d'un tungstate pour former un composé de formule A D $O_4$, composé que l'on vieillit puis que l'on mélange, en même temps ou successivement, avec une solution aqueuse d'un sel de bismuth trivalent et avec une solution aqueuse d'un vanadate, on ajuste ensuite la suspension formée à un pH de 5 à 8 en lui ajoutant une base minérale puis on l'agite pendant plusieurs heures.

7. Procédé selon la revendication 5 ou 6, caractérisé en ce que l'on ajuste le pH des solutions du sel de bismuth trivalent et du vanadate à une valeur telle que le pH de la suspension formée au cours de l'addition de ces solutions soit dans le domaine acide.

8. Procédé selon la revendication 5 ou 6, caractérisé en ce que l'on enrobe les composés obtenus de formule I d'une couche protectrice d'une matière minérale.

9. L'emploi des composés de formule I de la revendication 1 pour la coloration dans la masse de matières organiques macromoléculaires.